## Europäisches Patentamt
## European Patent Office
## Office européen des brevets

(19)

(11) Numéro de publication: **0 072 721**
**B1**

(12)

# FASCICULE DE BREVET EUROPEEN

(45) Date de publication du fascicule du brevet:
**06.11.85**

(51) Int. Cl.⁴: **H 04 M 3/30**, G 01 R 31/08

(21) Numéro de dépôt: **82401378.3**

(22) Date de dépôt: **23.07.82**

(54) **Système de localisation de boucles et d'ouvertures dans une ligne bifilaire.**

(30) Priorité: **14.08.81 FR 8115722**

(43) Date de publication de la demande:
**23.02.83 Bulletin 83/8**

(45) Mention de la délivrance du brevet:
**06.11.85 Bulletin 85/45**

(84) Etats contractants désignés:
**DE GB SE**

(56) Documents cités:
**US - A - 3 843 848**
**US - A - 3 912 882**
**US - A - 4 041 255**
**US - A - 4 054 759**

(73) Titulaire: **Gadonna, Michel, 148, rue de Boucicaut,
F-92260 Fontenay aux Roses (FR)**
Titulaire: **Kastler, Joel, 3, sentier des Bas Garmants,
F-92240 Malakoff (FR)**

(72) Inventeur: **Gadonna, Michel, 148, rue de Boucicaut,
F-92260 Fontenay aux Roses (FR)**
Inventeur: **Kastler, Joel, 3, sentier des Bas Garmants,
F-92240 Malakoff (FR)**

(74) Mandataire: **Martinet & Lapoux, 62, rue des Mathurins,
F-75008 Paris (FR)**

ACTORUM AG

## Description

La présente invention concerne un système de localisation de boucles et d'ouvertures par rapport à un dispositif inséré entre des premier et second tronçons d'une ligne bifilaire, tel que défini dans le préambule de la revendication 1.

Bien que l'invention ne soit pas limitée à ce type d'application, in se réfère dans la suite à la localisation de défauts dans une ligne bifilaire téléphonique d'abonné qui relie un centrale téléphonique à une installation téléphonique d'abonné. Les défauts que le système localise sont de deux types. Le premier type est relatif à des boucles, courts-circuits, défauts d'isolement ou shunts à faible résistance entre les deux fils de ligne ou entre l'un des fils de ligne et la terre. Le second type est relatif à des ouvertures, ruptures, coupures, ou fortes résistances série dans au moins un des fils de la ligne.

Un système de localisation tel que défini ci-dessus peut être obtenu en combinant les deux systèmes de localisation décrits dans le brevet US-A-3 843 848. L'un de ces systèmes inclut un dispositif de test inséré dans la ligne, incluant des moyens pour détecter un courant en ligne sous la forme d'un transformateur ayant deux enroulements primaires symétriques en série sur les fils de ligne et un enroulement secondaire prélevant un signal à la seconde fréquence qui est directement amplifié et filtré dans les moyens pour détecter la seconde fréquence. L'autre système inclut un dispositif de test inséré dans la ligne, incluant des moyens pour détecter une tension en ligne sous la forme de deux condensateurs de couplage reliés respectivement entre les fils de lignes et deux entrées des moyens pour détecter la seconde fréquence.

Dans les dispositifs de test décrits dans le US-A-3 843 848, une alimentation locale est nécessaire pour alimenter les divers composants connectés en sortie des moyens pour détecter la seconde fréquence. L'énergie nécessaire au fonctionnement du dispositif peut être une pile, ce qui exige un changement périodique de la pile, ou une paire de fils auxiliaires qui peut être coupée accidentellement.

Par ailleurs, les moyens de détection de courant et de tension selon le US-A-3 843 848 incluent un circuit à inductance et capacité prédéterminées accordé sur la seconde fréquence. Le dernier circuit engendre diverses distorsions autour de la seconde fréquence, notamment en ce qui concerne l'impédance, l'affaiblissement et le temps de propagation de groupe de la ligne, qui sont nuisibles à des signaux numériques lorsque la ligne téléphonique d'abonné est numérique. Etant donné que la plupart des lignes d'abonné actuelles sont destinées à court terme à transmettre des signaux numériquea par modem, l'utilisation d'un tel dispositif de test est très limitée.

La présente invention a pour but de fournir un système de localisation de boucles et/ou d'ouvertures dans une ligne bifilaire remédiant aux inconvénients précédents, et notamment à fournir un dispositif de test dans un tel système où l'énergie d'alimentation nécessaire à son fonctionnement est prélevée directement à partir de la ligne.

Les caractéristiques de fonctionnement du dispositif ou balise sour conservées lors de la numérisation de la ligne d'abonné.

En outre, les tensions d'activation de la balise selon l'invention restent faibles vis-à-vis des tensions utilisées par les terminaux d'abonné; la présence d'une terre au niveau de l'installation de l'abonné n'est pas nécessaire et aucun repérage des fils n'est demandé.

A ces fins, un système de localisation de boucles et d'ouvertures selon l'invention est tel que caractérisé dans la revendication 1.

Brièvement, le principe de localisation d'un défaut selon l'invention consiste, au niveau de la balise, à détecter un signal à la seconde fréquence émis à partir d'un système d'essai de la ligne situé à l'extrémité du premier tronçon de ligne et à émettre vers cette extrémité un signal à la première fréquence. La réception du signal à la première fréquence par le système d'essai signifie que le défaut est dans le second tronçon de ligne ou dans la charge d'utilisation de la ligne.

Les moyens de détection de courant peuvent comprendre en parallèle entre leurs bornes une résistance, un condensateur, deux diodes tête-bêche et des premiers moyens pour interrompre le courant entre les moyens d'alimentation et la ligne lorsque le courant en ligne est inférieur à un seuil prédéterminé.

Les moyens de détection de tension peuvent comprendre des moyens pour charger un premier condensateur sous ladite tension prédéterminée et des seconds moyens pour interrompre le courant entre les moyens d'alimentation et la ligne lorsque le premier condensateur n'est pas en charge. Ces moyens de détection de tension peuvent également inclure des moyens de temporisation pour prolonger la durée d'excitation des seconds moyens d'interruption de courant après la charge du premier condensateur et, par suite, prolonger lexcitation des moyens d'alimentation en vue de la détection d'un signal à la seconde fréquence. Les moyens de temporisation consistent essentiellement en un second condensateur qui se charge avec le premier condensateur et qui se décharge à travers les seconds moyens d'interruption de courant après la charge du premier condensateur.

Les moyens d'alimentation comprennent une première borne d'entrée reliée à l'un des fils de ligne et un seconde borne d'entrée excitée par les moyens de détection soit de courant, soit de tension. La seconde borne d'entrée ainsi qu'une borne à une tension intermédiaire à celles des bornes d'entrée constituent les bornes d'alimentation des moyens de détection de la seconde fréquence.

Selon un mode de réalisation préféré, les moyens de détection de la seconde fréquence comprennent un filtre passe-bande centré sur la seconde fréquence et des moyens pour convertir le signal filtré en une tension continue commandant les moyens de commutation. Ils peuvent comprendre également des moyens de temporisation pour commander les moyens de commutation lorsque le signal filtré excède une durée prédéterminée, afin de s'affranchir de toute commutation intempestive due à la détection d'un signal de parole à la seconde fréquence.

Les moyens de commutation comprennent de préférence un relais actionnant un commutateur qui relie sélectivement le premier tronçon de ligne soit au second tronçon de ligne soit aux moyens de génération de la première fréquence, et des moyens pour exciter le relais en réponse à la détection de la seconde fréquence.

Afin d'éviter tout problème de polarité des fils de ligne, la balise comprend un pont de diodes dont deux premières bornes opposées sont réliées aux fils de ligne et dont les deux secondes bornes opposées sont reliées aux bornes des moyens de détection de tension. L'une des secondes bornes du pont de diodes constitue une borne d'entrée commune aux moyens d'alimentation et aux moyens de détection de la seconde fréquence et une borne d'alimentation des moyens d'excitation d'un relais dans les moyens de commutation.

Les moyens de génération de la première fréquence peuvent comprendre des seconds moyens d'alimentation à partir de la tension en ligne suite au bouclage commandé par les moyens de commutation, des moyens pour osciller à la première fréquence suite à l'alimentation par les seconds moyens d'alimentation et des moyens en parallèle aux seconds moyens d'alimentation pour moduler le courant en ligne par le signal à la première fréquence délivré par les moyens d'oscillation.

D'autres avantages de la présente invention apparaîtront plus clairement à la lecture de la description qui suit de plusieurs exemples de réalisation et des dessins annexés correspondants dans lesquels:

la fig. 1 est un bloc-diagramme schématique d'un système selon l'invention pour localiser des défauts dans une ligne téléphonique d'abonné;

la fig. 2 est un bloc-diagramme d'une balise complète selon l'invention;

la fig. 3 illustre en détail un mode de réalisation préféré des circuits de détection de courant, du circuit de détection de tension et du circuit d'alimentation de la balise;

la fig. 4 illustre en détail un mode de réalisation préféré du circuit de détection de la seconde fréquence et du circuit de commutation de la balise; et

la fig. 5 illustre en détail un mode de réalisation préféré du générateur de la première fréquence de la balise.

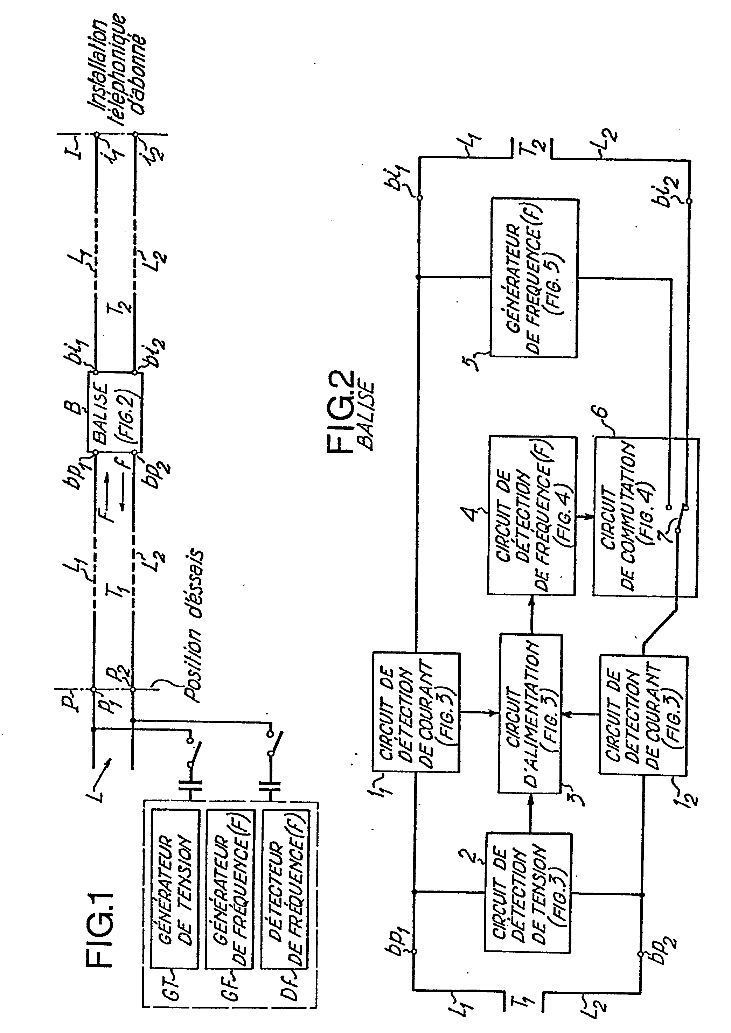

En se référant à la fig. 1, on y a représenté un mode de réalisation préféré du système de localisation de courts-circuits et d'ouvertures selon l'invention. Celui-ci est relatif à une ligne téléphonique d'abonné L à deux fils conducteurs $L_1$, $L_2$ dont des premières extrémités $p_1$, $p_2$ sont localisées à une position d'essai P associée au central téléphonique de rattachement et dont des secondes extrémités $i_1$, $i_2$ sont bouclées sur une charge d'utilisation que constitue l'installation téléphonique simple ou d'intercommunication I de l'abonné. Le dispositif de localisation, appelé balise B, est un quadripôle à deux paires de bornes $bp_1$, $bp_2$ et $bi_1$, $bi_2$ qui est introduit en série dans la ligne L. Il partage la ligne en un premier tronçon $T_1$, entre les paires de bornes $p_1$, $p_2$ et $bp_1$, $bp_2$ et en un second tronçon $T_2$, entre les paires de bornes $bi_1$, $bi_2$ et $i_1$, $i_2$.

A partir de la position d'essai P, il est possible de sélectionner parmi toutes les lignes téléphoniques d'abonné desservies par le central la ligne considérée L et de mesurer certains grandeurs électriques caractérisant cette ligne afin d'y déceler un défaut tel qu'un court-circuit ou une ouverture.

Comme on le verra dans la suite, l'exploitation de la balise B selon l'invention nécessite à la position d'essai un générateur de tension GT — lequel est disponible dans les systèmes d'essais et de mesures utilisés actuellement —, un générateur GF pour produire un signal à une seconde fréquence prédéterminée F transmis sur la ligne pour exciter la balise B et un détecteur Df pour détecter sur la ligne un signal à une première fréquence prédéterminée f émise par la balise B en réponse à son excitation. Les première et seconde fréquences sont comprises dans la bande de fréquence des signaux téléphoniques et sont, par exemple, égales à f = 800 Hz et F = 3400 Hz. Le détecteur de fréquence Df peut être ainsi constitué par un haut-parleur ou l'écouteur du combiné d'un poste téléphonique localisé à la position d'essai P.

La fig. 2 montre le bloc-diagramme d'une balise complète B conforme à l'invention. Elle comprend:

— deux circuits de détection de courant $1_1$ et $1_2$ qui sont insérés respectivement en série entre les bornes $bp_1$ et $bi_1$ sur le fil $L_1$ et entre les bornes $bi_2$ et $bp_2$ sur le fil $L_2$ et qui sont propres à localiser des courts-circuits en ligne;

— un circuit de détection de tension 2 qui est inséré en parallèle entre les bornes $bp_1$ et $bp_2$ de la balise et qui est propre à localiser des ouvertures en ligne;

— un circuit d'alimentation 3 qui est excité soit en réponse à un courant faible détecté par le circuit de détection de courant $1_1$ ou $1_2$, soit en réponse à un échelon de tension prédéterminé détecté par le circuit de détection de tension 2;

— un circuit de détection de fréquence 4, qui, lorsqu'il est mis sous tension par le circuit d'alimentation 3, peut détecter la seconde fréquence F émise par le générateur GF;

— un générateur de fréquence 5 mis sélectivement en parallèle entre les bornes $bi_1$ et $bi_2$ de la balise; et

— un circuit de commutation 6 commandé par le circuit de détection de fréquence 4 pour boucler la ligne à travers le générateur de fréquence 5 et, par suite, émettre sur la ligne la première fréquence f en réponse à la détection de la seconde fréquence F.

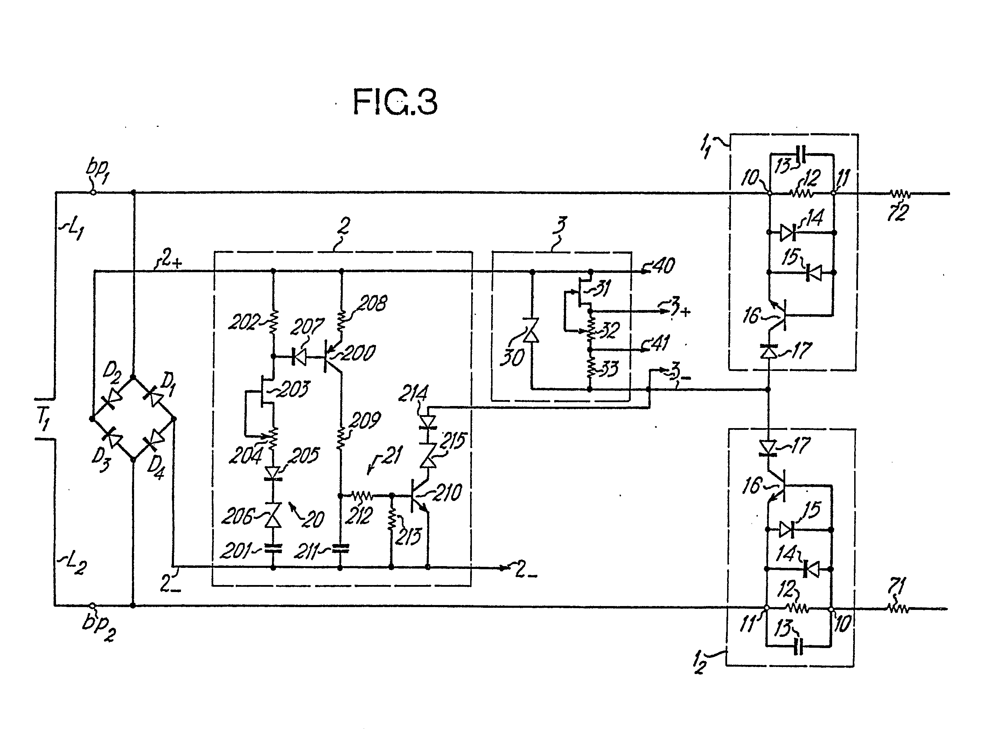

Les circuits $1_1$, $1_2$, 2 et 3 sont détaillés à la fig. 3.

On décrira d'abord l'un des circuit de détection de courant $1_1$ et $1_2$ qui sont identiques. Un tel circuit 1 comprend en parallèle entre ses bornes 10 e 11, une résistance 12, un condensateur 13, deux diodes tête-bêche 14 et 15 et la jonction base-émetteur d'un transistor bipolaire NPN 16. Le condensateur 13 découple la résistance 12 lors de courants alternatifs ou impulsionnels. Les diodes 14 e 15 protègent le transistor 16 qui joue le rôle d'interrupteur électronique pour le circuit d'alimentation 3. En effet, le collecteurdu transistor 16 est relié à la borne de polarité négative 3— du circuit d'alimentation 3 à travers une diode 17.

Le circuit de détection de tension 2 est un circuit polarisé qui est inséré classiquement dans la branche médiane d'un pont redresseur ayant quatre diodes $D_1$, $D_2$, $D_3$, $D_4$. La cathode de la diode $D_1$ et l'anode de la diode $D_2$ sont reliées à la borne $bp_1$ sur le fil

de ligne $L_1$, tandis que l'anode de la diode $D_3$ et la cathode de la diode $D_4$ sont reliées à la borne $bp_2$ sur le fil $L_2$. Les cathodes des diodes $D_2$ et $D_3$ sont reliées à la borne de polarité positive 2+ du circuit 2 tandis que les anodes des diodes $D_1$ et $D_4$ sont reliées à la borne de polarité négative 2— du circuit 2.

Entre les bornes 2+ et 2—, le circuit de détection de tension 2 comprend un circuit de détection d'échelon de tension 20 qui est organisé autour d'un transistor bipolaire PNP 200 et d'un condensateur 201 et qui commande un «interrupteur» électronique 21 organisé autour d'un transistor 210 et d'un condensateur de temporisation 211.

Le circuit 20 comprend un circuit de base du transistor 200 qui inclut entre les bornes 2+ et 2— les éléments suivants en série: une résistance 202, la jonction drain-source d'un transistor à effet de champ 203, un diviseur de tension résistif 204, une simple diode 205, une diode de Zener 206 et le condensateur 201. La borne commune à la résistance 202 et au drain du transistor 203 est reliée à la base du transistor 200 à travers une simple diode 207. La grille du transistor à effet de champ 203 est reliée au point de division de tension du diviseur 204. Le circuit 20 comprend également une seconde voie parallèle entre les bornes 2+ et 2— qui inclut une résistance d'émetteur 208, la jonction émetteur-collecteur du transistor bipolaire PNP 200, une résistance de collecteur 209 et le condensateur 211.

L'interrupteur électronique 21 comprend, en outre, un circuit résistif d'entrée qui comporte une résistance 212, dont une borne est reliée à la borne commune à la résistance 209 et au condensateur 211, et une résistance de polarisation 213 entre la borne négative 2— et la borne commune à la résistance 212 et à la base du transistor bipolaire NPN 210. Le transistor 210 est monté en émetteur commun: son emetteur est relié à la borne 2 — et son collecteur est relié à la borne négative 3 — du circuit d'alimentation à travers une simple diode 214 et une diode de Zener 215.

Le circuit d'alimentation 3 comprend en parallèle entre les bornes 2+ et 3—, d'une part, une diode de Zener 30 et d'autre part, en série la jonction drain-source d'un transistor à effet de champ 31, un diviseur de tension résistif 32 et un potentiomètre 33. La grille du transistor 31 est reliée au point de division de tension du diviseur 32. Le circuit d'alimentation présente quatre bornes de sortie. Une première paire de bornes est propre à l'alimentation de circuits intégrés — notamment 430, 440 et 450 comme on le verra dans la suite — du circuit de détection de fréquence 4 et est constitué par une borne 3+ qui est commune à la source du transistor 31 et au diviseur de tension 32, et par la borne 3— qui est commune aux anodes de la diode 30 et des trois diodes 214 et 17 associées aux interrupteurs 21 et 16. Une seconde paire de bornes est constituée par la borne 2+ et la borne commune au diviseur de tension 32 et au potentiomètre 33 et sont propres à appliquer le signal reçu à la seconde fréquence F aux bornes d'entrée 40 et 41 du circuit de détection de fréquence 4.

Le principe de l'excitation du circuit d'alimentation 3 pour permettre la détection de la fréquence F par le circuit 4 est le suivant:

Si le défaut en ligne qui a été décelé à la position d'essai P est un court-circuit, l'un des circuits de détection de courant $1_1$ et $1_2$ ou les deux sont utilisés si le court-circuit est localisé au-delà de la balise B, dans le second tronçon de ligne $T_2$. Le circuit $1_1$ est utilisé pour des courts-circuits francs entre le fil $L_1$ et la masse et le circuit $1_2$ est utilisé pour des courts-circuits francs entre le fil $L_2$ et la masse; les deux circuits $1_1$ et $1_2$ sont utilisés pour des courts-circuits entre les deux fils de ligne $L_1$ et $L_2$.

Pour la détection d'un court-circuit, on se réfère ci-après au circuit de détection de courant $1_1$, par exemple. Si un courant circule dans la ligne L et si le court-circuit est dans le tronçon $T_2$, côté de l'installation d'abonné I, le courant traverse la diode $D_2$ ou $D_3$, la jonction drain-source du transistor 31, le diviseur de tension 32, la résistance 33 et la diode 17, ce qui sature le transistor 16. Dans ce cas, le circuit d'alimentation 3 est excité. Des tensions sont disponibles aux bornes 3+, 3—, 40 et 41 du circuit de détection de fréquence 4. Le potentiomètre du diviseur de tension 32 sert à régler le courant traversant le transistor 31 qui est protégé contre les surtensions par la diode de Zener 30. Le potentiomètre 33 est destiné à équilibrer les tensions entre les bornes 3+ et 3— autour de celle à la borne 41 qui est telle que $V(41) = [V(3+) + V(3—)]/2$. La différence de potentiel $V(3+) — V(3—)$ entre les bornes 3+ et 3— est choisie en pratique égale à 4 volts.

Si le défaut en ligne qui a été décelé à la position d'essai P est une ouverture, le circuit de détection de tension 2 est utilisé si l'ouverture est au-delà de la balise B et localisée dans le second tronçon de ligne $T_2$, côté installation.d'abonné I. Au début de la procédure de localisation, la ligne n'est pas mise sous tension à la position d'essais P et les condensateurs 201 et 211 sont déchargés. Lorsqu'un échelon de tension est appliqué à l'extrémité de ligne $P_1$, $P_2$ par le générateur GT, le premier condensateur 201 se charge lentement et à courant constant faible à travers la diode $D_2$ ou $D_3$, la borne 2+, la résistance 202, la jonction drain-source du transistor 203, le diviseur de tension 204, la diode 205 et la diode de Zener 206.

Le courant traversant la résistance 202 sature le transistor 200 dont la courant collecteur-émetteur charge le second condensateur 211 et, à travers les résistances 212 et 213, ferme l'interrupteur électronique constitué essentiellement par le transistor 210, lequel devient passant. Tant que le premier condensateur 201 n'est pas totalement chargé, le second condensateur 211 est maintenu en charge. Puis en réponse à fin de charge du condensateur 201, le transistor 200 est bloqué et le second condensateur 211 se décharge dans les éléments 212, 213 et 210.

Le condensateur 211 joue ainsi le rôle d'un moyen de temporisation qui prolonge la durée prédéterminée de conduction du transistor 210; cette durée est donc égale à la somme de la durée de charge du premier condensateur 201 et de la durée de décharge du second condensateur 211. Pendant cette durée prédéterminée, le courant circule, comme dans le cas d'une localisation de court-circuit, à travers les éléments $D_2$ ou $D_3$, 31, 32 et 33, ce qui excite le circuit d'alimentation 3, et également à travers les éléments 214, 215, 210 et $D_4$ ou $D_1$. En l'absence d'un signal à la seconde fréquence F dans la ligne L, les tensions aux bornes 3+, 3— et 41 sont disponibles pratiquement pendant une durée de l'ordre de la minute. La diode de Zener 215 de l'interrupteur 21 a une tension de seuil de l'ordre de 22 volts et évite d'appliquer entre les bornes 2+ et 3— une tension débloquant la diode de Zener 30, ce qui shunterait le circuit d'alimentation 3 et par suite le circuit de détection de fréquence 4 lors de la réception du signal à la seconde fréquence F.

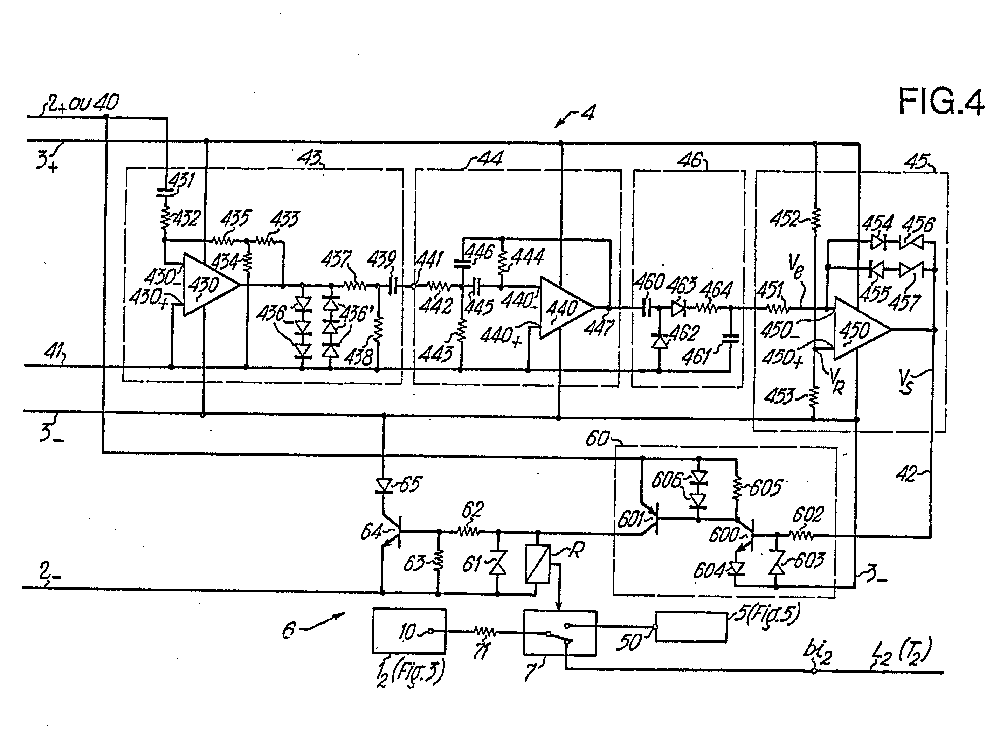

On se réfère maintenant à la fig. 4.

Le circuit de détection de la seconde fréquence 4 comprend essentiellement entre ses bornes d'entrée 40, 41 et sa borne de sortie 42 un circuit d'amplification 43, un filtre passe-bande 44 et un circuit de comparaison de tension 45. Ces trois circuits 43, 44 et 45 sont organisés autour d'amplificateurs opérationnels 430, 440 et 450 qui sont alimentés par les bornes 3+ et 3— du circuit d'alimentation 3. Les amplificateurs opérationnels sont à très faible consommation de courant et fonctionnent sous des tensions d'alimentation de très faibles valeurs, de l'ordre de ± 1,2 volt.

L'entrée inverse 430— de l'amplificateur 430 est couplée à la borne 40 à travers un condensateur 431 en série avec une résistance d'entrée 432. Le circuit d'amplification 43 a un gain élevé avec une grande impédance d'entrée; la boucle de réaction résistive de l'amplificateur 430 est constitué par un circuit résistif en T qui inclut deux résistances 433 et 434 en série entre le sortie de l'amplificateur 430 et son entrée directe 430+ reliée à la borne 41, ainsi qu'une résistance 435 entre la borne commune aux résistances 433 et 434 et l'entrée inverse 430—. Le gain du circuit 43 est fonction du rapport: (résistance 433 + résistance 435) / (résistance 432) et est pratiquement égal à 20 dB. L'impédance d'entrée du circuit 43 est supérieure à 1 MΩ afin de ne pas perturber les signaux transmis sur la ligne. La sortie du circuit 43 est protégée par deux séries de diode tête-bêche, 436 et 436', entre la sortie de l'amplificateur 430 et la borne 41, la tension de saturation étant typiquement de ± 1,5 volts. Le signal de sortie de l'amplificateur 43 est prélevé à l'entrée 441 du filtre 44 à travers un pont diviseur de tension à résistance 437 et 438 et un condensateur de couplage 439, de manière à ne pas saturer l'entrée du second amplificateur 440.

Le filtre 44 est un filtre passe-bande classique du second-ordre dont la bande passante est centrée sur la seconde fréquence F = 3400 Hz transmise par le générateur de fréquence GF à la position d'essai P. Le coefficient de surtension et le gain à la fréquence centrale F du filtre sont égaux à 10. Le filtre 44 comprend trois résistances 442, 443 et 444 et deux condensateurs 445 et 446. La résistance 442 a l'une de ses bornes qui est reliée à l'entrée 441 du filtre 44, et son autre borne qui est reliée aux condensateurs 445 et 446 et à la résistance 443. L'entrée inverse 440— de l'amplificateur 440 monté en inverseur est reliée à l'autre borne du condensateur 445 et à une borne de la résistance 444, et la borne directe 440+ de l'amplificateur 44 est reliée à la borne 41 et à l'autre borne de la résistance 443. Les autres bornes du condensateur 446 et de la résistance 444 sont reliée à la sortie 447 de l'amplificateur 440.

Le signal en sortie 447 du filtre 44 est délivré à un redresseur doubleur de tension 46. Ce dernier est constitué par deux condensateurs 460 et 461, deux diodes 462 et 463 et une résistance 464. Le condensateur 460 a l'une de ses bornes qui est reliée à la borne de sortie 447 du filtre 44, et son autre borne qui est reliée à la cathode de la diode 462 et à l'anode de la diode 463, laquelle est en série avec la résistance 464. L'anode de la diode 462 et une borne du condensateur 461 sont reliées à la borne 41. Les autres bornes de la résistance 464 et du condensateur 461 sont reliées à une résistance d'entrée 451 du circuit de comparaison de tension 45. Le redresseur 46 est donc classique à l'exception de la présence de la résistance 464 qui contribue à retarder la charge du condensateur de sortie 461. De ce fait, le redresseur ne redresse qu'un signal à la seconde fréquence F ayant une durée excédent une durée prédéterminée, en pratique égale à 300 ms. Ces conditions évitent que la balise soit excitée par des signaux de parole à la fréquence F.

Le circuit de comparaison de tension 45 compare la tension d'entrée redressée $V_e$ qui est appliquée à l'entrée inverse 450— de l'amplificateur 450 à travers la résistance 451, à une tension de référence $V_R$ qui est appliquée à l'entrée directe 450+ de l'amplificateur 450. Cette tension de référence $V_R$ est à la borne commune à deux résistances 452 et 453 qui sont respectivement reliées aux bornes d'alimentation 3+ et 3—. Les résistances 452 et 453 ont des valeurs ohmiques très élevées et leur somme est de l'ordre du MΩ, afin que la tension de référence $V_R$ soit égale à environ 0,7 [V(3+) — V(3—)].

La boucle de contre-réaction de l'amplificateur 450 entre la borne d'entrée 450— et sa borne de sortie 42 est constituée par deux séries tête-bêche de diode, chacune composée d'une simple diode 454, 455 et d'une diode de Zener 456, 457. Les diodes de Zener 456 et 457 jouent le rôle de limiteurs de surcharge et les simples diodes diodes 454 et 455 présentent des résistances élevées. Puisque la résistance de contre-réaction est l'inverse de la résistance des diodes, l'amplificateur 450 a un gain très élevé et se sature pour des différences de tensions $V_R$ — $V_e$ très faibles, inférieures au millivolt. La tension de référence $V_R$ étant fonction des tensions d'alimentation aux bornes 3+ et 3—, celle-ci peut être plus faible que ± 2 volts, tout en activant l'amplificateur 450 dans certains cas, tel qu'en présence d'un court-circuit à l'extrémité, côté installation I, d'une ligne longue. La tension $V_S$ en sortie 42 résulte donc de la comparaison des tensions $V_e$ et $V_R$ et, de manière générale, de la conversion en tension continue par les circuits 46 et 45 du signal sortant du filtre 44. Elle est égale à V(3—) si $V_e < V_R$, ce qui signifie qu'aucun signal à la seconde fréquence F n'a été détecté, et est égale à V(3+) si $V_e \geqslant V_R$ en réponse à un signal à la seconde fréquence F ayant une durée au moins égale à 300 ms. Dans ce dernier cas, la tension $V_S$ est suffisante pour exciter le circuit de commutation 6 afin que celui-ci ferme la ligne à travers le générateur de fréquence 5 et ouvre la boucle constituée par le second tronçon de ligne $L_2$ et l'installation I.

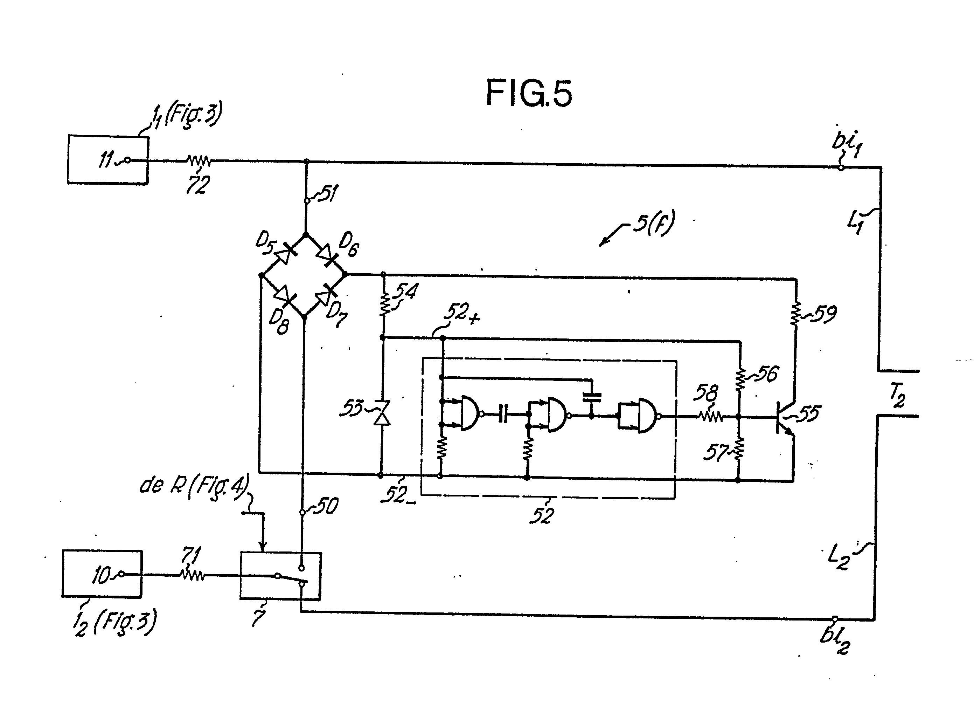

Le circuit de commutation 6 montré à la fig. 4 consiste essentiellement en des moyens 60 pour exciter un relais R actionnant un commutateur 7 à deux positions fixes sans position intermédiaire qui est inséré sur l'un des fils de ligne du tronçon $T_2$, soit par exemple le fil $L_2$ comme montré aux figs. 2, 4 et 5. Le contact mobile du commutateur 7 connecte la borne 10 du circuit de détection de courant $1_2$, reliée à la base de son transistor 16, et la borne $bi_2$ de la balise B à travers une résistance 71, comme illustré sur les dessins, lorsqu'aucun signal à la fréquence F n'a été détecté, c'est-à-dire lorsque $V_e < V_R$. Dans le cas contraire, en réponse à la détection d'un signal à la fréquence F et de $V_R \geqslant V_e$, le contact mobile du commutateur 7 relie l'une, 50, des bornes du générateur de fréquence 5 au fil $L_2$ du premier tronçon de ligne $T_1$ à travers la résistance 71 et le circuit $1_2$. Ceci boucle la ligne sur le générateur 5 dont l'autre borne 51 est reliée à la borne $bi_1$ de la balise B et à la borne 11 du circuit de détection de courant $1_1$ à travers une résistance 72 comme montré à la fig. 5, et permet donc de retransmettre la première fréquence f vers la position d'essai P.

Selon le mode de réalisation illustré à la fig. 4, le circuit de commutation 6 comprend un circuit de commande 60 du relais R organisé autour d'un transistor bipolaire NPN 600 et d'un transistor bipolaire PNP 601. La base du transistor 600 est reliée à la borne 42 à travers une résistance 602 et à la borne 3— à travers une diode de Zener 603. L'émetteur du transistor 600 est relié à la borne 3— à travers une simple diode 604. Le collecteur du transistor 600 est relié à la base du second transistor 601 ainsi qu'à des bornes d'une résistance 605 et d'une série de deux simples diodes 606 dont l'autre borne est reliée à la borne 2+ et à l'émetteur du transistor 601. Les trois diodes 606 et 603 servent de limiteur de la tension base-émetteur des transistors 600 et 601. Lorsque la tension $V_S$ en sortie 42 du circuit de comparaison de tension 45 est au niveau haut ($V_e \geqslant V_R$), le transistor 600 est passant et le courant de son collecteur traversant la résistance 605 sature le transistor 601. Ce courant excite la bobine du relais R, laquelle est interconnectée entre le collecteur du transistor 601 et la borne 2—, si la tension d'alimentation du transistor 601 — ou en sortie du pont de diodes $D_1$ à $D_4$ — entre les bornes 2+ et 2— est supérieure à 4 volts.

En parallèle à la bobine du relais R sont prévus une diode de Zener 61 protégeant le relais contre les surtensions, ainsi qu'un pont diviseur de tension qui est constitué par des résistances 62 et 63 permettant de débloquer un transistor bipolaire NPN 64. La base du transistor 64 est reliée à une borne commune aux résistance 62 et 63. L'autre borne de la résistance 62 est reliée à la borne commune à la diode de Zener 61, à la bobine du relais R et au collecteur du transistor 601. La borne 2— est reliée également à l'émetteur du transistor 601 et à l'autre borne de la résistance 63. Le collecteur du transistor 64 est relié à la borne 3— à travers une diode 65. Le transistor 64 joue le rôle d'un moyen pour maintenir la tension d'alimentation de la balise B, lorsque le relais R est excité.

Un mode préféré du générateur de la première fréquence 5 est détaillé à la fig. 5. Le générateur 5 comprend un oscillateur classique 52, tel qu'un multivibrateur qui oscille à la première fréquence f = 800 Hz. La régulation de la tension entre les bornes d'alimentation 52+ et 52— du multivibrateur 52 est obtenue par une diode de Zener 53. La cathode de la diode de Zener 53 est reliée à travers une résistance 54 aux cathodes de deux diodes $D_6$ et $D_7$ d'un pont de diodes. L'anode de la diode de Zener 53 est reliée aux anodes des autres diodes $D_5$ et $D_8$ du pont de diodes. Les autres bornes des diodes $D_5$ et $D_6$ et les autres bornes des diodes $D_7$ et $D_8$ sont reliées respectivement aux bornes 51 et 50, déjà citées, du générateur 5.

Le couplage de la sortie du multivibrateur 52 à la ligne L est réalisé à travers un transistor bipolaire NPN 55 dont le circuit de base comprend trois résistances 56, 57 et 58 reliées à la base du transistor 55 et respectivement reliées aux bornes 52+, 52— et à la borne de sortie du multivibrateur. L'émetteur du transistor 55 est relié à la borne 52— et le collecteur de ce transistor est relié aux cathodes des diodes $D_6$ et $D_7$ à travers une résistance 59.

La tension de sortie du multivibrateur modifie la tension base-émetteur du transistor 55, lequel module à la fréquence f le courant circulant dans la ligne lorsque le commutateur 7 relie la borne 50 au fil $L_2$ du premier tronçon de ligne $T_1$ en réponse à la détection d'un signal à la seconde fréquence F, c'est-à-dire lorsqu'aucune ouverture ou aucun court-circuit n'est présent dans le premier tronçon de ligne $T_1$; ceci signifie que l'ouverture ou le court-circuit qui a été décelé à la position d'essais P est localisé dans le second tronçon de ligne $T_2$ ou dans l'installation d'abonné I. Réciproquement, l'absence de réception de la première fréquence f par le détecteur Df à la position d'essais P signifie que le défaut, ouverture ou court-circuit, est localisé dans le premier tronçon de ligne $T_1$.

Un système de localisation de défauts d'une ligne selon l'invention peut également comporter une pluralité de balises B dont le nombre et l'insertion sont choisis en dépendance de la longueur de la ligne et des endroits d'accessibilité de celle-ci. Afin de distinguer les localisations de défauts, la fréquence d'excitation F et la fréquence de réponse f de chaque balise sont respectivement différentes de celles des autres balises. Une telle disposition permet alors une localisation du défaut décelé tronçon par tronçon. Dans ce cas, le générateur GF et le détecteur Df à la position d'essai P sont des générateurs et détecteurs à multifréquence correspondant aux fréquences prédéterminées F et f des balises.

Par ailleurs, bien que l'invention ait été décrite en référence à un système de localisation de défauts dans un circuit téléphonique d'abonné, les principes de fonctionnement du système selon l'invention peuvent s'appliquer à la localisation de défauts dans d'autres circuits, du genre comportant une ligne bifilaire dont une extrémité est reliée à un circuit électronique, tel qu'un appareil de mesure ou d'enregistrement de données ou analogues, qui est télécommandé à l'autre extrémité de la ligne par un poste central. En particulier, entrent dans le cadre de l'invention des systèmes tels que celui décrit ci-dessus pour la localisation de défauts sur toute ligne bifilaire du genre téléphonique, TELEX ou spécialisée, quel que soit le circuit d'utilisation desservi par la ligne.

Les différentes variantes du dispositif ou balise B, en tant que tel, entrent également dans le cadre de l'invention.

**Revendications**

1. Système de localisation de boucles et d'ouvertures par rapport à un dispositif (B) inséré entre des premier et second tronçons ($T_1$, $T_2$) d'une ligne bifilaire (L), une première extrémité (P) du premier tronçon ($T_1$) étant reliée sélectivement à des moyens (Df) pour détecter au moins une première fréquence (f) et à des moyens (GF) pour générer au moins une seconde fréquence (F), ledit dispositif (B) comprenant des moyens ($1_1$) en série sur l'un des fils ($L_1$) de la ligne pour détecter un courant en ligne, des moyens (2) en parallèle aux fils de la ligne ($L_1$, $L_2$) pour détecter une tension en ligne, des moyens (4) pour détecter la seconde fréquence (F) dans la ligne, des moyens (5) pour générer la première fréquence (f) modulant le courant en ligne, et des moyens de commutation (6) pour boucler le premier tronçon de ligne ($T_1$) à travers les moyens de génération de la première fréquence (5) en réponse à la détection de la seconde fréquence (F), caractérisé en ce que la première extrémité (P) du premier tronçon ($T_1$) est également reliée sélectivement à des moyens (GT) pour appliquer une tension prédéterminée et en ce que le dispositif (B) comprend des moyens d'alimentation de tension (3) qui sont excités soit en réponse à un courant détecté par les moyens de détection de courant ($1_1$) lorsqu'une boucle est présente dans le second tronçon ($T_2$), soit en réponse à la tension prédéterminée détectée par les moyens de détection de tension (2) lorsqu'une ouverture est présente dans le second tronçon ($T_2$), afin de mettre sous tension par les moyens d'alimentation (3) les moyens pour détecter une seconde fréquence (F).

2. Système conforme à la revendication 1, caractérisé en ce que les moyens de détection de courant ($1_1$) comprennent en parallèle entre leurs bornes (10, 11) une résistance (12), un condensateur (13), deux diodes tête-bêche (14, 15) et des premiers moyens (16, 17) pour interrompre le courant entre les moyens d'alimentation (3) et la ligne lorsque le courant en ligne est inférieur à un seuil prédéterminé.

3. Système conforme à la revendication 2, caractérisé en ce que les premiers moyens d'interruption de courant (16, 17) comprennent un transistor (16) dont la jonction base-émetteur est parallèle aux bornes (10, 11) des moyens de détection de courant ($1_1$) et dont le collecteur est relié à l'une des bornes (3—) des moyens d'alimentation (3).

4. Système conforme à la revendication 3, caractérisé en ce qu'au moins une diode (17) est insérée entre le collecteur du transistor (16) et ladite borne (3—) des moyens d'alimentation (3).

5. Système conforme à l'une des revendications 1 à 4, caractérisé en ce qu'il comprend d'autres moyens de détection de courant ($1_2$) en série sur l'autre fil de ligne ($L_2$).

6. Système conforme à l'une des revendications 1 à 5, caractérieé en ce que les moyens de détection de tension (2) comprennent des moyens (20) pour charger un premier condensateur (201) sous ladite tension prédéterminée et des seconds moyens (21) pour interrompre le courant entre les moyens d'alimentation (3) et la ligne lorsque le premier condensateur (201) n'est pas en charge.

7. Système conforme à la revendication 6, caractérisé en ce que les moyens de charge (200) comprennent un transistor (200) qui est monté en émetteur commun entre les bornes (2+, 2—) des moyens de détection de tension, dont le circuit de base comprend ledit premier condensateur (201) et dont le collecteur commande les seconds moyens d'interruption de courant (21).

8. Système conforme à la revendication 7, caractérisé en ce que le circuit de base dudit transistor (200) inclut en série avec ledit premier condensateur (201) au moins l'un des éléments tels qu'une résistance (202), un transistor (203), une résistance ajustable (204), une simple diode (205) et une diode de Zener (206).

9. Système conforme à la revendication 7 ou 8, caractérisé en ce que les seconds moyens d'interruption de courant (21) comprennent un transistor (210) dont la base reçoit le courant du transistor (200) des moyens de charge (20) et dont la jonction collecteur-émetteur est reliée à l'une des bornes (3—) des moyens d'alimentation et à l'une des bornes (2—) des moyens de détection de tension (2).

10. Système conforme à la revendication 9, caractérisé en ce que le collecteur du transistor (210) des seconds moyens d'interruption de courant (21) est relié à ladite borne (3—) des moyens d'alimentation (3) à travers au moins une diode de Zener (215).

11. Système conforme à l'une des revendications 6 à 10, caractérisé en ce que les moyens de détection de tension (2) comprennent des moyens de temporisation (211) pour prolonger la durée d'excitation des seconds moyens d'interruption de courant (210) après la charge du premier condensateur (201).

12. Système conforme à la revendication 11, caractérisé en ce que les moyens de temporisation comprennent un second condensateur (211) qui se charge avec le premier condensateur (201) et qui se décharge à travers les seconds moyens d'interruption de courant (210) après la charge du premier condensateur (201).

13. Système conforme aux revendications 9 et 12, caractérisé en ce que le second condensateur (211) est interconnecté entre une borne (209, 212) qui est commune au collecteur du transistor (200) des moyens de charge et à la base du transistor (210) des seconds moyens d'interruption de courant, et ladite borne (2—) des moyens de détection de tension (2).

14. Système conforme à l'une des revendications 1 à 13, caractérisé en ce que les moyens d'alimentation (3) comprennent une première borne d'entrée (2+) reliée à l'un des fils de ligne (L, $D_2$, $D_3$) et une seconde borne d'entrée (3—) excitée par les moyens de détection soit de courant (1) soit de tension (2).

15. Système conforme à la revendication 14, caractérisé en ce que les moyens d'alimentation (3) comprennent en série entre leurs bornes d'entrée (2+, 3—) un transistor (31) et deux résistances de préférence ajustables (32, 33), la borne (3+) commune au transistor (31) et à l'une (32) des résistances constituant une borne d'alimentation des moyens de détection de la seconde fréquence (4), dont l'autre borne d'alimentation est constituée par la borne d'entrée (3—) à exciter.

16. .Système conforme à la revendication 15, caractérisé en ce que les moyens d'alimentation (3) comprennent entre ses bornes d'entrée (2+, 3—) une diode de Zener (30).

17. Système conforme à l'une des revendications 1 à 16, caractérisé en ce que les moyens de détection de la fréquence (4) comprennent un filtre passebande (44) centré sur la seconde fréquence (F) et des moyens (46, 45) pour convertir le signal filtré en une tension continue (V$_S$, 42) commandant les moyens de commutation (6).

18. Système conforme à la revendication 17, caractérisé en ce que les moyens de conversion comprennent des moyens de redressement double de la tension du signal filtré (46) et des moyens (45) pour comparer la tension redressée (V$_e$) à une tension de référence (V$_R$) dépendante des moyens d'alimentation (3) en vue d'obtenir la tension de commande (V$_S$) lorsque la tension redressée est supérieure à la tension de référence.

·19. Système conforme à la revendication 18, caractérisé en ce que les moyens de comparaison de tension (45) comprennent un amplificateur (450) dont la boucle de contre-réaction inclut deux voies parallèles ayant chacune au moins une diode de Zener (456, 457) tête-bêche par rapport à l'autre.

20. Système conforme à l'une des revendications 17 à 19, caractérisé en ce que les moyens de détection de la seconde fréquence (4) comprennent des moyens de temporisation (464) pour commander les moyens de commutation (6) lorsque la durée du signal filtré excède une durée prédéterminée (300 ms).

21. Système conforme aux revendications 18 et 20, caractérisé en ce que les moyens de temporisation consistent en une résistance (464) introduite entre la diode (463) et le condensateur (461) de sortie des moyens de redressement de tension (46).

22. Système conforme à l'une des revendications 17 à 21, caractérisé en ce que les moyens de détection de la seconde fréquence (4) comprennent en entrée des moyens d'amplification (43) à boucle à contre réaction résistive en T (433 à 435) dont la sortie est protégée par deux série de diodes tête-bêche (436, 436').

23. Système conforme à la revendication 22, caractérisé en ce que les moyens d'amplification (43), le filtre passe bande (44) et les moyens de conversion (46, 45) comprennent chacun un amplificateur opérationnel (430, 440, 450) alimenté par les moyens d'alimentation (3).

24. Système conforme à l'une des revendications 1 à 23, caractérisé en ce que les moyens de commutation (6) comprennent un relais (R) actionnant un commutateur (7) qui relie sélectivement le premier tronçon de ligne (T$_1$) soit au second tronçon de ligne (T$_2$) soit aux moyens de génération de la première fréquence (5), et des moyens (60) pour exciter le relais (R) en réponse à la détection de la seconde fréquence (F).

25. Système conforme aux revendications 17 et 24, caractérisé en ce que les moyens d'excitation de relais (60) comprennent un premier étage è transistor (600) qui est alimenté par une borne (3—) des moyens d'alimentation (3) excitée par les moyens de détection soit de courant (1) soit de tension (2) et qui est commandé par ladite tension continue (V$_S$, 42), et un second étage à transistor (601) qui est alimenté par la ligne (2+, 2—), qui a pour charge la bobine dudit relais (R) et qui est commandé par le premier étage (600).

26. Système conforme à la revendication 25, caractérisé en ce que les moyens de commutation (6) comprennent à la suite du second étage (601), un troisième étage à transistor (64) pour maintenir la tension d'alimentation des moyens d'alimentation (3) lorsque le relais est excité.

27. Système conforme à l'une des revendications 24 à 26, caractérisé en ce que les moyens de commutation (6) comprennent une diode de Zener (61) en parallèle au relais (R).

28. Système conforme à l'une des revendications 1 à 27, caractérisé en ce qu'il comprend un premier pont de diodes (D$_1$ à D$_4$) dont deux premières bornes opposées sont reliées aux fils de ligne (L$_1$, L$_2$) et dont deux secondes bornes opposées sont reliées aux bornes (2+, 2—) des moyens de détection de tension, et en ce que l'une (2+) des secondes bornes du premier pont de diodes (D$_1$ à D$_4$) constitue une borne d'entrée commune aux moyens d'alimentation (3) et aux moyens de détection de la seconde fréquence (4) et une borne d'alimentation de moyens d'excitation (601) d'un relais (R) dans les moyens de commutation (6).

29. Système conforme à l'une des revendications 1 à 28, caractérisé en ce que les moyens de génération de la première fréquence (5) comprennent des seconds moyens d'alimentation (53, 54) à partir de la tension en ligne suite au bouclage commandé par les moyens de commutation (6, 7), des moyens (52) pour osciller à la première fréquence (f) suite à l'alimentation par les seconds moyens d'alimentation et des moyens (55) en parallèle aux seconds moyens d'alimentation pour moduler le courant en ligne par le signal à la première fréquence (f) délivré par les moyens d'oscillation (52).

30. Système conforme à la revendication 29, caractérisé en ce que les seconds moyens d'alimentation comprennent une diode de Zener (53) qui est interconnectée aux bornes d'alimentation (52+, 52—) des moyens d'oscillation (52) et qui est en série avec une résistance (54) entre les bornes (50, 51) des moyens de génération de la première fréquence (5).

31. Système conforme à la revendication 29 ou 30, caractérisé en ce que les moyens d'oscillation comprennent un multivibrateur (52).

32. Système conforme à l'une des revendications 29 à 31, caractérisé en ce que les moyens de modulation comprennent un étage à transistor (55) entre les bornes (50, 51) des moyens de génération de la première fréquence (5), qui est commandé par le signal à la première fréquence (f) délivré par les moyens d'oscillation (52).

33. Système conforme à l'une des revendications 29 à 32, caractérisé en ce qu'il comprend un second pont de diodes (D₅ à D₈) dont deux bornes opposées (50, 51) sont reliées sélectivement aux fils de ligne (L₂, L₁) à travers les moyens de commutation (6, 7) et dont les deux autres bornes opposées constituent les bornes des moyens de génération de la première fréquence (5).

34. Système conforme à l'une des revendications 1 à 33, caractérisé en ce que les moyens de détection de la première fréquence (Df) comprennent un haut-parleur.

35. Système conforme à l'une des revendications 1 à 34, caractérisé en ce que les moyens de détection de la première fréquence (Df) comprennent l'écouteur du combiné d'un poste téléphonique.

36. Système conforme à l'une des revendications 1 à 35, caractérisé en ce que lesdites première et seconde fréquences (f, F) sont comprises dans la bande des fréquences téléphoniques.

37. Système conforme à l'une des revendications 1 à 36, caractérisé en ce qu'il comprend plusieurs dispositifs (B) qui sont insérés dans la ligne bifilaire (L) et dont les premières fréquences (f) et les secondes fréquences (F) sont différentes.

38. Système de localisation de boucles conforme à l'une des revendications 1 à 5 et 14 à 37, dans lequel ledit dispositif ne comprend pas de moyens de détection de tension (2).

39. Système de localisation d'ouvertures conforme à l'une des revendications 1 et 6 à 37 dans lequel ledit dispositif ne comprend pas de moyens de détection de courant (1).

**Patentansprüche**

1. System zur Lokalisierung von Schleifen und Unterbrechungen bezüglich einer Vorrichtung (B), die zwischen einen ersten und einen zweiten Abschnitt (T₁, T₂) in eine Zweidrahtleitung (L) geschaltet ist, wobei ein erster Endpunkt (P) des ersten Abschnitts (T₁) wahlweise verbunden ist mit Mitteln (Df) zum Feststellen mindestens einer ersten Frequenz (f) und Mitteln (GF) zum Erzeugen mindestens einer zweiten Frequenz (F), und wobei die genannte Vorrichtung (B) folgende Mittel umfasst: Mittel (1₁), in Serie geschaltet mit einem der Leitungsdrähte (L₁), zum Feststellen eines Leitungsstromes, Mittel (2), parallel geschaltet zu den Leitungsdrähten (L₁, L₂), zum Feststellen einer Leitungsspannung, Mittel (4), zum Feststellen der zweiten Frequenz (F) in der Leitung; Mittel (5) zum Erzeugen der den Leitungsstrom modulierenden ersten Frequenz (f); und Kommutationsmittel (6) zum Umschalten des ersten Leitungsabschnitts (T₁) mit den Mitteln (5) zur Erzeugung der ersten Frequenz in Abhängigkeit von der Feststellung der zweiten Frequenz (F), dadurch gekennzeichnet, dass der erste Endpunkt (P) des ersten Abschnitts (T₁) ebenfalls wahlweise mit Mitteln (GT) zum Anlegen einer vorbestimmten Spannung verbunden ist, und dass die Vorrichtung (B) Mittel (3) zur Einspeisung der Spannung enthält, welche entweder auf einen durch die Mittel (1₁) festgestellten Strom bei Vorhandensein einer Schleife im zweiten Abschnitt (T₂) erregt werden, oder auf die vorbestimmte, durch die Mittel (2) festgestellte Spannung bei Vorhandensein einer Unterbrechung im zweiten Abschnitt (T₂) erregt werden, um die Mittel zur Feststellung einer zweiten Frequenz (F) durch die Mittel zur Einspeisung (3) einzuschalten.

2. System nach Anspruch 1, dadurch gekennzeichnet, dass die Mittel zur Stromfeststellung (1₁) zwischen ihren Anschlüssen (10, 11) in Parallelschaltung einen Widerstand (12), einen Kondensator (13), zwei zueinander entgegengesetzt geschaltete Dioden (14, 15) und erste Mittel (16, 17) zur Unterbrechung des Stroms zwischen den Mitteln zur Einspeisung (3) und der Leitung, falls der Leitungsstrom unterhalb einer vorbestimmten Schwelle liegt, aufweisen.

3. System nach Anspruch 2, dadurch gekennzeichnet, dass die ersten Mittel zur Stromunterbrechung (16, 17) einen Transistor (16) umfassen, dessen Basis-Emitterstecke parallel zu den Anschlüssen (10, 11) der Mittel zur Stromfeststellung (1₁) geschaltet ist, und dessen Kollektor mit einem der Anschlüsse (3—) der Mittel zur Einspeisung (3) verbunden ist.

4. System nach Anspruch 3, dadurch gekennzeichnet, dass mindestens eine Diode (17) zwischen den Kollektor des Transistors (16) und den genannten Anschluss (3—) der Mittel zur Einspeisung (3) geschaltet ist.

5. System nach einem der Ansprüche 1-4, dadurch gekennzeichnet, dass es weitere Mittel zur Stromfeststellung (1₂) enthält, die mit dem anderen Leitungsdraht (L₂) in Serie geschaltet sind.

6. System nach einem der Ansprüche 1-5, dadurch gekennzeichnet, dass die Mittel zur Spannungsfeststellung (2) Mittel (20) zum Laden eines ersten Kondensators (201) unter der genannten vorbestimmten Spannung enthalten und zweite Mittel (21) zum Unterbrechen des Stromes zwischen den Mitteln zur Einspeisung (3) und der Leitung enthalten, falls der erste Kondensator (201) nicht geladen ist.

7. System nach Anspruch 6, dadurch gekennzeichnet, dass die Lademittel (200) einen Transistor (200) enthalten, der in Emitterschaltung zwischen die Anschlüsse (2+, 2—) der Mittel zur Spannungsfeststellung geschaltet ist, und dessen Basisstromkreis den genannten ersten Kondensator (201) enthält und dessen Kollektor die zweiten Mittel zur Stromunterbrechung (21) steuert.

8. System nach Anspruch 7, dadurch gekennzeichnet, dass der Basiskreis des genannten Transistors (200) in Serie mit dem genannten ersten Kondensator (201) mindestens ein weiteres Element enthält, wie beispielsweise einen Widerstand (202), einen Transistors (203), einen einstellbaren Widerstand (204), eine einfache Diode (205) oder eine Zener-Diode (206).

9. System nach Anspruch 7 oder 8, dadurch gekennzeichnet, dass die zweiten Mittel zur Stromunterbrechung (21) einen Transistor (210) enthalten, dessen Basis den Strom des Transistors (200) der Lademittel (20) aufnimmt und dessen Kollektor-Emitterstrecke mit einem der Anschlüsse (3—) der Einspeisemittel und mit einem der Anschlüsse (2—) der Mittel zur Spannungsfeststellung (2) verbunden ist.

10. System nach Anspruch 9, dadurch gekennzeichnet, dass der Kollektor des Transistors (210) der zweiten Mittel zur Unterbrechung des Stroms (21) mit dem genannten Anschluss (3—) der Einspeisemittel (3) über mindestens eine Zener-Diode (215) verbunden ist.

11. System nach einem der Ansprüche 6-10, dadurch gekennzeichnet, dass die Mittel zur Spannungsfeststellung (2) Verzögerungsmittel (211) zum Verlängern der Erregungsdauer der zweiten Mittel zur Stromunterbrechung (210) nach der Ladung des ersten Kondensators (201) enthalten.

12. System nach Anspruch 11, dadurch gekennzeichnet, dass die Verzögerungsmittel einen zweiten Kondensator (211) enthalten, der sich mit dem ersten Kondensator (201) lädt und der sich über die zweiten Stromunterbrechungsmittel (210) nach der Ladung des ersten Kondensators (201) entlädt.

13. System nach Anspruch 9 und 12, dadurch gekennzeichnet, dass der zweite Kondensator (211) zwischengeschaltet ist zwischen einen Anschluss (209, 212), der dem Kollektor des Transistors (200) der Lademittel und der Basis des Transistors (210) der Stromunterbrechungsmittel gemeinsam ist, und den genannten Anschluss (2—) der Mittel zur Spannungsfeststellung (2).

14. System nach einem der Ansprüche 1-13, dadurch gekennzeichnet, dass die Einspeisemittel (3) einen ersten Eingangsanschluss (2+) enthalten, der mit einem der Leitungsdrähte (L, $D_2$, $D_3$) und mit einem zweiten Eingangsanschluss (3—) verbunden ist, welcher durch die Mittel zur Feststellung entweder des Stromes (1) oder der Spannung (2) erregt wird.

15. System nach Anspruch 14, dadurch gekennzeichnet, dass die Einspeisemittel (3) einen Transistor (31) und zwei vorzugsweise einstellbare Widerstände (32, 33) zwischen ihren Eingangsanschlüssen (2+, 3—) in Serie geschaltet aufweisen, und dass der dem Transistor (31) und einem der Widerstände (32) gemeinsame Anschluss (3+) einen Speiseanschluss der Mittel zur Feststellung der zweiten Frequenz (4) bildet, deren anderer Speiseanschluss gebildet wird durch den zur Erregung bestimmten Eingangsanschluss (3—).

16. System nach Anspruch 15, dadurch gekennzeichnet, dass die Einspeisemittel (3) zwischen ihren Eingangsanschlüssen (2+, 3—) eine Zener-Diode (30) enthalten.

17. System nach einem der Ansprüche 1-16, dadurch gekennzeichnet, dass die Mittel zur Feststellung der zweiten Frequenz (4) ein auf die zweite Frequenz (F) zentriertes Durchlassfilter (44) und Mittel (46, 45) zur Konvertierung des gefilterten Signals in eine Gleichspannung ($V_S$, 42) aufweisen, die die Kommutationsmittel (6) steuert.

18. System nach Anspruch 17, dadurch gekennzeichnet, dass die Konvertierungsmittel Mittel zur Doppelgleichrichtung der Spannung des gefilterten Signals (46) und Mittel (45) zum Vergleich der gleichgerichteten Spannung ($V_e$) mit einer von den Einspeisemitteln (3) abhängigen Bezugsspannung ($V_R$) enthält, um eine Steuerspannung ($V_S$) zu erhalten, wenn die gleichgerichtete Spannung über der Bezugsspannung liegt.

19. System nach Anspruch 18, dadurch gekennzeichnet, dass die Mittel zum Vergleich der Spannung (45) einen Verstärker (450) enthalten, dessen Gegenkopplungsschleife zwei Parallelwege mit je mindesten einer Zener-Diode (456, 457) enthält, die zueinander entgegengesetzt geschalten sind.

20. System nach einem der Ansprüche 17-19, dadurch gekennzeichnet, dass die Mittel zur Feststellung der zweiten Frequenz (4) Verzögerungsmittel (464) enthalten, um die Kommutationsmittel (6) zu steuern, falls die Dauer des gefilterten Signals eine vorbestimmte Dauer (300 ms) übersteigt.

21. System nach Anspruch 18 und 20, dadurch gekennzeichnet, dass die Verzögerungsmittel aus einem Widerstand (464) bestehen, der zwischen die Diode (463) und den Ausgangskondensator (461) der Mittel zur Gleichrichtung der Spannung (46) geschaltet ist.

22. System nach einem der Ansprüche 17-21, dadurch gekennzeichnet, dass die Mittel zur Feststellung der zweiten Frequenz (4) am Eingang Verstärkungsmittel (43) mit einer als T geschalteten Gegenkopplungs-Widerstandsschleife (433-435) enthalten, deren Ausgang durch zwei einander entgegengesetzt in Serie geschaltete Dioden (436, 436') abgeschirmt ist.

23. System nach Anspruch 22, dadurch gekennzeichnet, dass die Verstärkungsmittel (43), das Durchlassfilter (44) und die Konvertierungsmittel (46, 45) jeweils einen Operationsverstärker (430, 440, 450) enthalten, der durch die Einspeisemittel (3) gespeist wird.

24. System nach einem der Ansprüche 1-23, dadurch gekennzeichnet, dass die Kommutationsmittel (6) ein Relais (R) enthalten, welches einen Umschalter (7) steuert, welcher wahlweise den ersten Leitungsabschnitt ($T_1$) entweder mit dem zweiten Leitungsabschnitt ($T_2$) oder mit den Mitteln zur Erzeugung der ersten Frequenz (5) verbindet, sowie Mittel (60) enthalten zur Erregung des Relais (R) in Reaktion auf die Feststellung der zweiten Frequenz (F).

25. System nach Anspruch 17 und 24, dadurch gekennzeichnet, dass die Mittel zur Erregung des Relais (60) eine erste Transistorstufe (600) enthalten, welche durch einen Anschluss (3—) der Einspeisemittel (3) gespeist wird, der durch die Mittel zur Feststellung entweder des Stroms (1) oder der Spannung (2) erregt wird, und welche durch die genannte Gleichspannung ($V_S$, 42) gesteuert wird, und eine zweite Transistorstufe (601) enthalten, welche gespeist wird durch die Leitung (2+, 2—), welche als Last die Spule des genannten Relais (R) hat und welche gesteuert wird durch die erste Stufe (600).

26. System nach Anspruch 25, dadurch gekennzeichnet, dass die Kommutationsmittel (6) hinter der zweiten Stufe (601) eine dritte Transistorstufe (64) zur Aufrechterhaltung der Speisespannung der Einspeisemittel (3) bei erregtem Relais enthalten.

27. System nach einem der Ansprüche 24-26, dadurch gekennzeichnet, dass die Kommutationsmittel (6) eine dem Relais (R) parallel geschaltete Zener-Diode enthalten.

28. System nach einem der Ansprüche 1-27, gekennzeichnet durch eine erste Diodenbrücke ($D_1$ bis $D_4$), deren beide erste gegenüberliegende Anschlüsse mit den Leitungsdrähten ($L_1$, $L_2$) verbunden sind und deren beide zweite gegenüberliegende Anschlüsse mit den Anschlüssen (2 +, 2—) der Mittel zur Spannungsfeststellung verbunden sind, wobei einer (2 +) der zweiten Anschlüsse der ersten Diodenbrücke ($D_1$ bis $D_4$) einen gemeinsamen Eingangsanschluss der Einspeisemittel (3) und der Mittel zur Feststellung der zweiten Frequenz (4) sowie einen Speiseanschluss der Erregungsmittel (601) des Relais (R) innerhalb der Kommutationsmittel (6) bildet.

29. System nach einem der Ansprüche 1-28, dadurch gekennzeichnet, dass die Mittel zur Erzeugung der ersten Frequenz (5) zweite Einspeisemittel (53, 54) enthalten, die durch die Kommutationsmittel (6, 7) aufgrund der Spannung in der Leitung nach Schleifenbildung gesteuert werden, sowie Oszillationsmittel (52) von der ersten Frequenz (f) nach der Speisung durch die zweiten Speisemittel sowie mit den zweiten Einspeisemittel parallel geschaltete Mittel (55) zur Modulation des Leitungstroms durch das Signal von der ersten Frequenz (f) enthalten, das durch die Oszillationsmittel (52) abgegeben wird.

30. System nach dem Anspruch 29, dadurch gekennzeichnet, dass die zweiten Speisemittel eine Zener-Diode (53) enthalten, die mit den Anschlüssen zur Speisung (52 +, 52—) der Oszillationsmittel (52) verbunden ist, und welche in Serie liegt mit einem Widerstand (54) zwischen den Anschlüssen (50, 51) der Mittel zur Erzeugung der ersten Frequenz (5).

31. System nach dem Anspruch 29 oder 30, dadurch gekennzeichnet, dass die Oszillationsmittel einen Multivibrator (52) enthalten.

32. System nach einem der Ansprüche 29-31, dadurch gekennzeichnet, dass die Mittel zur Modulation eine Transistorstufe (55) zwischen den Anschlüssen (50, 51) der Mittel zur Erzeugung der ersten Frequenz (5) enthalten, die durch das Signal der ersten Frequenz (f) gesteuert wird, welches durch die Oszillationsmittel (52) geliefert wird.

33. System nach einem der Ansprüche 29-32, gekennzeichnet durch eine zweite Diodenbrücke ($D_5$ bis $D_8$), deren zwei gegenüberliegende Anschlüsse (50, 51) wahlweise verbunden sind mit den Leitungsdrähten ($L_2$, $L_1$) über die Kommutationsmittel (6, 7) und deren zwei andere gegenüberliegende Anschlüsse Anschlüsse der Mittel zur Erzeugung der ersten Frequenz (5) bilden.

34. System nach einem der Ansprüche 1-33, dadurch gekennzeichnet, dass die Mittel zur Feststellung der ersten Frequenz (Df) einen Lautsprecher enthalten.

35. System nach einem der Ansprüche 1-34, dadurch gekennzeicnet, dass die Mittel zur Feststellung einer ersten Frequenz (Df) den Kombinationshörer einer Fernsprechstelle enthalten.

36. System nach einem der Ansprüche 1-35, dadurch gekennzeichnet, dass die genannten ersten und zweiten Frequenzen (f, F) im telefonischen Frequenzband enthalten sind.

37. System nach einem der Ansprüche 1-36, gekennzeichnet durch mehrere Vorrichtungen (B), die in die Zweidrahtleitung (L) zwischengeschaltet sind, und deren erste Frequenzen (f) und zweite Frequenzen (F) unterschiedlich sind.

38. System zur Lokalisierung von Schleifen nach einem der Ansprüche 1-5 und 14-37, in welchem die genannte Vorrichtung keine Mittel zur Feststellung der Spannung (2) enthält.

39. System zur Lokalisierung von Unterbrechungen nach einem der Ansprüche 1 und 6-37, in welchem die genannte Vorrichtung keine Mittel zur Stromfeststellung (1) enthält.

**Claims**

1. System for locating short circuits and open circuits with respect to a device (B) inserted between first and second sections ($T_1$, $T_2$) of a two-lead line (L), a first end (P) of the first section ($T_1$) being selectively connected to means (Df) for detecting at least a first frequency (f) and to means (GF) for generating at least a second frequency (F), said device (B) comprising means ($1_1$) in series on one of the line leads ($L_1$) for detecting an in-line current, means (2) in parallel with the line leads ($L_1$, $L_2$) for detecting an in-line voltage, means (4) for detecting the second frequency (F) in the line, means (5) for generating the first frequency (f) modulating the in-line current, and switching means (6) for looping the first line section ($T_1$) across the first frequency generating means (5) in response to detection of the second frequency (F), characterized in that the first end (P) of the first section ($T_1$) is also selectively connected to means (GT) for applying a predetermined voltage and in that the device (D) comprises voltage supply means (3) energized either in response to a current detected by the current detecting means ($1_1$) when there is a short circuit in the second section ($T_2$), or in response to the predetermined voltage detected by the voltage detecting means (2) when there is an open circuit in the second section ($T_2$) thereby power supplying the second frequency (F) detecting means by the supply means (3).

2. System according to claim 1, characterized in that the current detecting means ($1_1$) comprises in parallel between their terminals (10, 11), a resistor (12), a capacitor (13), two oppositely-poled diodes (14, 15) and first means (16, 17) for cutting-off the current between the supply means (3) and the line when the in-line current is less than a predetermined threshold.

3. System according to claim 2, characterized in that the first current cutting-off means (16, 17) comprises a transistor (16) whose base-emitter junction is in parallel with the terminals (10, 11) of the current detecting means ($1_1$) and whose collector is connected to one of the terminals (3—) of the supply means (3).

4. System according to claim 3, characterized in that at least one diode (17) is inserted between the transistor (16) collector and said terminal (3—) of the supply means (3).

5. System according to one of claims 1 to 4, characterized in that it comprises other current detecting means in series on the other line lead (L₂).

6. System according to one of claims 1 to 5, characterized in that the voltage detecting means (2) comprises means (20) for charging a first capacitor (201) at said predetermined voltage and second means (21) for cutting-off current between the supply means (3) and the line when the first capacitor (201) is not being charged.

7. System according to claim 6, characterized in that the charging means (20) comprises a transistor (200) connected in a common emitter mode between the terminals (2+, 2—) of the voltage detecting means, the base circuit of the transistor comprising said first capacitor (201), and the collector of the transistor controlling the current cutting-off means (21).

8. System according to claim 7, characterized in that the base circuit of said transistor (200) includes in series with said first capacitor (201) at least one of elements such as a resistor (202), a transistor (203), an adjustable resistor (204), a simple diode (205) and a Zener diode (206).

9. System according to claim 7 or 8, characterized in that the second cutting-off means (21) comprises a transistor (210) whose base receives the current from the transistor (200) of the charging means (20) and whose collector-emitter junction is connected to one of therminals (3—) of the supply means and to one of the terminals (2—) of the voltage detecting means (2).

10. System according to claim 9, characterized in that the collector of the transistor (210) in the second current cutting-off means (21) is connected to said terminal (3—) of the supply means (3) across at least one Zener diode (215).

11. System according to one of claims 6 to 10, characterized in that the voltage detecting means (2) comprises timing means (211) for extending the excitation period of the second current cutting-off means (210) after the first capacitor (201) has been charged up.

12. System according to claim 11, characterized in that the timing means comprises a second capacitor (211) which charges up with the first capacitor (201) and discharges across the second current cutting-off means (210) after the first capacitor (201) has been charged up.

13. System according to claims 9 and 12, characterized in that the second capacitor (211) is interconnected between a terminal (209, 212) that is common to the collector of the transistor (200) in the charging means and to the base of the transistor (210) in the second current cutting-off means, and said terminal (2—) of the voltage detecting means (2).

14. System according to one of claims 1 to 13, characterized in that the supply means (3) comprises a first input terminal (2+) connected to one of the line leads (L, D₂, D₃) and a second input terminal (3—) energized by either the current detecting means (1) or the voltage detecting means (2).

15. System according to claim 14, characterized in that the supply means (3) comprises in series between their input terminals (2+, 3—), a transistor (31) and two preferably adjustable resistors (32, 33), the terminal (3+) common to the transistor (31) and one (32) of the resistors constituting a supply terminal of the second frequency detecting means (4) whose other supply terminal is made up of the input terminal (3—) to be energized.

16. System according to claim 15, characterized in that the supply means (3) comprises a Zener diode (30) between their input terminals (2+, 3—).

17. System according to one of claims 1 to 16, characterized in that the second frequency detecting means (4) comprises a bandpass filter (44) tuned to the second frequency (F) and means (46, 45) for converting the filtered signal into a direct voltage (V_S, 42) controlling the switching means (6).

18. System according to claim 17, characterized in that the converting means comprises means (46) for full-wave rectifying the voltage of the filtered signal and means (45) for comparing the rectified voltage (V_e) with a reference voltage (V_R) dependent on the supply means (3) to obtain the control voltage (V_S) when the rectified voltage is greater than the reference voltage.

19. System according to claim 18, characterized in that the voltage comparing means (45) comprises an amplifier (450) whose feedback loop includes two parallel paths each having at least one Zener diode (456, 457) oppositely-poled with respect to the other.

20. System according to one of claims 17 to 19, characterized in that the second frequency detecting means (4) comprises timing means (464) for controlling the switching means (6) when the duration of the filtered signal exceeds a predetermined time (300 ms).

21. System according to claims 18 and 20, characterized in that the timing means comprises a resistor (464) connected between the diode (463) and the capacitor (461) across the output of the voltage rectifying means (46).

22. System according to one of claims 17 to 21, characterized in that the second frequency detecting means (4) comprises at their inputs, amplifying means (43) with a resistive bridged T feedback loop whose output is protected by two series of oppositely-poled diodes (436, 436').

23. System according to claim 22, characterized in that the amplifying means (43), the bandpass filter (44) and the converting means (46, 45) each comprises an operational amplifier (430, 440, 450) fed by the supply means (3).

24. System according to one of claims 1 to 23, characterized in that the switching means (6) comprises a relay (R) driving a switch (7) that selectively connects the first line section (T₁) either to the second line section (T₂) or to the first frequency generating means (5), and means (60) for activating the relay (R) in response to detection of the second frequency (F).

25. System according to claims 17 and 24, characterized in that the relay activating means (60) comprises a first transistor stage (600) that is fed by a terminal (3—) of the supply means (3) energized by either the current detecting means (1) or the voltage detecting means (2) and that is controlled by said direct voltage ($V_S$, 42), and a second transistor stage (601) that is fed by the line (2 + , 2—), whose charge is the coil of said relay (R) and that is controlled by the first stage (600).

26. System according to claim 25, characterized in that the switching means (6) comprises a third transistor stage (64) after the second transistor stage (601) for holding the supply voltage in the supply means (3) when the relay is being activated.

27. System according to one of claims 24 to 26, characterized in that the switching means (6) comprises a Zener diode (61) in parallel with the relay (R).

28. System according to one of claims 1 to 27, characterized in that it comprises a first diode bridge ($D_1$ to $D_4$) whose two first opposite terminals are connected to the line leads ($L_1$, $L_2$) and whose two second opposite terminals are connected to the terminals (2 + , 2—) of the voltage detecting means, and in that one (2 + ) of the second terminals of the first diode bridge ($D_1$ to $D_4$) constitutes an input terminal common to the supply means (3) and the second frequency detecting means (4) and a supply means terminal of relay (R) activating means (601) in the switching means (6).

29. System according to one of claims 1 to 28, characterized in that the first frequency generating means (5) comprises second supply means (53, 54) from the in-line voltage after looping controlled by the switching means (6, 7), means (52) for oscillating at the first frequency (f) following supply by the second supply means, and means (55) in parallel with the second supply means for modulating the in-line current by the first frequency signal (f) delivered from the oscillating means (52).

30. System according to claim 29, characterized in that the second supply means comprises a Zener diode (53) that is interconnected to the supply terminals (52 + , 52—) of the oscillating means (52) and that is in series with a resistor (54) between the terminals (50, 51) of the first frequency generating means (5).

31. System according to claim 29, characterized in that the oscillating means comprises a multivibrator (52).

32. System according to one of claims 29 to 31, characterized in that the modulating means comprises a transistor stage (55) connected between the terminals (50, 51) of the first frequency generating means (5) and controlled by the first frequency signal (f) delivered from the oscillating means (52).

33. System according to one of claims 29 to 32, characterized in that it comprises a second diode bridge ($D_5$ to $D_8$), two opposite terminals (50, 51) of which are selectively connected to the line leads ($L_2$, $L_1$) through the switching means (6, 7) and the other two opposite terminals of which constitute the terminals of the first frequency generating means (5).

34. System according to one of claims 1 to 33, characterized in that the first frequency detecting means (Df) comprises a loudspeaker.

35. System according to one of claims 1 to 34, characterized in that the first frequency detecting means (Df) comprises the earphone of a telephone set.

36. System according to one of claims 1 to 35, characterized in that said first and second frequencies (f, F) lie in the telephone frequency bandwidth.

37. System according to one of claims 1 to 36, characterized in that it comprises several devices (B) that are inserted in the two-lead line (L) and whose first frequencies (f) and second frequencies (F) differ.

38. Short circuit locating system according to one of claims 1 to 5 and 14 to 37, in which said device does not comprise any voltage detection means (2).

39. Open circuit locating system according to one of claims 1 and 6 to 37, in which said device does not comprise any current detecting means (1).

# FIG.1

| | |
|---|---|
| GT | GÉNÉRATEUR DE TENSION |
| GF | GÉNÉRATEUR DE FRÉQUENCE (F) |
| Df | DÉTECTEUR DE FRÉQUENCE (F) |

Position d'éssais

BALISE (FIG.2)

Installation téléphonique d'abonné

# FIG.2
## BALISE

CIRCUIT DE DÉTECTION DE COURANT (FIG.3)

CIRCUIT DE DÉTECTION DE TENSION (FIG.3)

CIRCUIT D'ALIMENTATION (FIG.3)

CIRCUIT DE DÉTECTION DE FRÉQUENCE (F) (FIG.4)

GÉNÉRATEUR DE FRÉQUENCE (F) (FIG.5)

CIRCUIT DE COMMUTATION (FIG.4)

CIRCUIT DE DÉTECTION DE COURANT (FIG.3)

0 072 721

# FIG.3

0 072 721

FIG.4

0 072 721

FIG.5